# EUROPEAN PATENT SPECIFICATION

(11) **EP 3 886 075 B1**
(45) Date of publication and mention of the grant of the patent: **06.08.2025**
(21) Application number: 19906772.9
(22) Date of filing: 28.06.2019
(51) Int. Cl.: G08G 1/14, G08G 1/16, G06F 18/25, G06V 10/80, G06V 20/58

(54) **PARKING SPACE DETECTION METHOD AND DEVICE**
PARKPLATZDETEKTIONSVERFAHREN UND -VORRICHTUNG
PROCÉDÉ ET DISPOSITIF DE DÉTECTION DE PLACE DE STATIONNEMENT

(30) Priority: 03.01.2019 CN 201910004847
(43) Date of publication of application: 29.09.2021
(73) Proprietor: Guangzhou Xiaopeng Motors Technology Co., Ltd., Guangzhou (CN)
(72) Inventor: ZHANG, Xuefei, Guangzhou, Guangdong 510000 (CN); XIAO, Zhiguang, Guangzhou, Guangdong 510000 (CN); LAI, Jianming, Guangzhou, Guangdong 510000 (CN); JIANG, Shaofeng, Guangzhou (CN)
(74) Representative: Ran, Handong
(86) International application number: PCT/CN2019/093527
(87) International publication number: WO 2020/140410

(56) References cited:
- CN-A- 103 600 707
- CN-A- 104 076 363
- CN-A- 104 916 163
- CN-A- 108 281 041
- CN-A- 109 712 427
- US-B1- 9 773 413
- US-B2- 9 361 529
- SUHR JAE KYU ET AL: "Sensor Fusion-Based Vacant Parking Slot Detection and Tracking", IEEE TRANSACTIONS ON INTELLIGENT TRANSPORTATION SYSTEMS, IEEE, PISCATAWAY, NJ, USA, vol. 15, no. 1, 1 February 2014 (2014-02-01), pages 21 - 36, XP011538711, ISSN: 1524-9050, [retrieved on 20140130], DOI: 10.1109/TITS.2013.2272100
- "Embedded Vision in Advanced Driver Assistance Systems", 1 January 2014, SPRINGER, ISBN: 978-3-319-09386-4, article ZORAN NIKOLIC: "Embedded Vision in Advanced Driver Assistance Systems", pages: 45 - 69, XP055669416, DOI: 10.1007/978-3-319-09387-1_3

## Description

### Field of Invention

The present invention relates to the field of parking space detection technology and, more particularly, to a parking space detection method and device.

### Background

Parking is a driving scenario that occurs quite frequently in daily driving. Parking has a high demand for driving skills because of the susceptibility to crashes, scratches, and the like during parking. With the rapid development of scientific technology, parking assist technology has rapidly evolved. Currently, vision-based parking assistance techniques generally employ edge detection method to detect whether a parking space is a vacant parking space. However, this detection method is less accurate in detection. For example, when a water stain or weed is present in the parking space, the parking space is often detected as an occupied parking space, resulting in a missed parking space in the detection and therefore reducing parking success rate. Document SUHR JAE KYU ET AL: "Sensor Fusion-Based Vacant Parking Slot Detection and Tracking", 1 February 2014, XP011538711 generally discloses a sensor fusion-based vacant parking slot detection and tracking system. Document Zoran Nikolic: "Embedded Vision in Advanced Driver Assistance Systems" In: "Embedded Vision in Advanced Driver Assistance Systems", 1 January 2014, XP055669416 discloses that in sequential configuration, radar (or lidar) sensor is used to detect potential candidates in the attention-focusing phase and then during the second phase, candidates generate areas of interest in image data for algorithms to verify the target presence.

### Summary of Invention

Embodiments of the present invention disclose a parking space detection method and device, which can reduce parking spaces missed by detection and enhance the success rate of automatic parking. Aspects of the present invention are set out in the accompanying claims.

In accordance with a first aspect of the present invention, there is provided a parking space detection method as defined in claim 1.

In a preferred embodiment, the method further comprises additional steps defined by the dependent claim 2.

In a preferred embodiment, the method further comprises:
if the offset value between the two second parking space corner points and the two first parking space corner points is greater than or equal to the specified first threshold, detecting whether an obstacle is present in the first available parking space using the ultrasonic sensor disposed at the rear of the vehicle; and
if an obstacle is present, shifting the central axis of the first available parking space in a direction away from the obstacle based on a location of the obstacle in the first available parking space, and determining a location of a fourth available parking space based on the shifted central axis of the first available parking space.

In a preferred embodiment, the method further comprises, after the determination of the location of the second available parking space based on the line segment connecting the two second parking space corner points:
checking whether a deviation value between the location of the second available parking space and the location of the first available parking space is greater than a specified second threshold;
if the deviation value between the location of the second available parking space and the location of the first available parking space is greater than the specified second threshold, performing the step of detecting whether an obstacle is present in the first available parking space using the ultrasonic sensor disposed at the rear of the vehicle; and
if the deviation value between the location of the second available parking space and the location of the first available parking space is less than or equal to the specified second threshold, performing the step of detecting whether an obstacle is present in the second available parking space using an ultrasonic sensor disposed at the rear of the vehicle.

In a preferred embodiment, the method further comprises, prior to the capturing of the image of the exterior scene on the side of the vehicle by the image capturing device disposed at the rear-view mirror of the vehicle:
detecting whether an ambient light intensity around the vehicle is lower than a preset light intensity; and
if so, turning lights of the vehicle on to facilitate the capturing of the image of the exterior scene on the side of the vehicle by the image capturing device disposed at the rear-view mirror of the vehicle.

In accordance with a second aspect of the present invention, there is provided a parking space detection device as defined in the independent claim 7.

In a preferred embodiment, the parking space detection device further comprises features defined in the dependent claim 8.

In a preferred embodiment, the parking space detection device further comprises:
the ultrasonic detection unit, further configured to, if the first checking unit determines that the offset value between the two second parking space corner points and the two first parking space corner points is greater than or equal to the specified first threshold, detect whether an obstacle is present in the first available parking space using the ultrasonic sensor disposed at the rear of the vehicle; and
a fourth determination unit, configured to, if the ultrasonic detection unit detects that the obstacle is present in the first available parking space, shift the central axis of the first available parking space in a direction away from the obstacle based on a location of the obstacle in the first available parking space, and determine a location of a fourth available parking space based on the shifted central axis of the first available parking space.

In a preferred embodiment, the parking space detection device further comprises:
a second checking unit, configured to check whether a deviation value between the location of the second available parking space and the location of the first available parking space is greater than a specified second threshold, after the second determination unit determines the location of the second available parking space based on the line segment connecting the two second parking space corner points; and
the ultrasonic detection unit, further configured to, if the second checking unit determines that the deviation value between the location of the second available parking space and the location of the first available parking space is greater than the specified second threshold, detect whether an obstacle is present in the first available parking space using the ultrasonic sensor disposed at the rear of the vehicle;
wherein the ultrasonic detection unit is configured to detect whether an obstacle is present in the second available parking space using an ultrasonic sensor disposed at the rear of the vehicle in a way that:
   the ultrasonic detection unit detects whether an obstacle is present in the second available parking space using the ultrasonic sensor disposed at the rear of the vehicle, if the second checking unit determines that the deviation value between the location of the second available parking space and the location of the first available parking space is less than or equal to the specified second threshold.

In a preferred embodiment, the parking space detection device further comprises:
a second detection unit, configured to, prior to that the capturing unit captures the image of the exterior scene on the side of the vehicle by the image capturing device disposed at the rear-view mirror of the vehicle, detect whether an ambient light intensity around the vehicle is lower than a preset light intensity; and
a switch unit, configured to turn lights of the vehicle on to facilitate the capturing of the image of the exterior scene on the side of the vehicle by the image capturing device disposed at the rear-view mirror of the vehicle, when the second detection unit detects that the ambient light intensity around the vehicle is lower than the preset light intensity.

In accordance with a third aspect of the present invention, which does not fall within the subject-matter for which protection is sought, there is provided a parking space detection device, which comprises:
a memory device having stored thereon executable program code; and
a processor coupled with the memory,
wherein the processor is configured to execute the executable program code stored on the memory to carry out the parking space detection method disclosed in the first aspect of the embodiments of the present invention.

In accordance with a third aspect of the present invention, which does not fall within the subject-matter for which protection is sought, there is provided a computer readable storage medium having stored thereon a computer program, which causes a computer to carry out the parking space detection method disclosed in the first aspect of the present invention.

In accordance with a fourth aspect of the present invention, which does not fall within the subject-matter for which protection is sought, there is provided a computer program product which, when executed on a computer, causes the computer to carry out some or all of the steps of one of the methods of the first aspect.

In accordance with a fifth aspect of the present invention, which does not fall within the subject-matter for which protection is sought, there is provided an application distributing platform for distributing a computer program product, wherein the computer program product, when executed on a computer, causes the computer to carry out some or all of the steps of one of the methods of the first aspect.

Compared with the prior art, the embodiments of the present invention provide following beneficial effects.

In the embodiments of the present invention, the parking space detection device captures the image of the exterior scene on the side of the vehicle through the image capturing device disposed at the rear-view mirror of the vehicle. The parking space detection device detects two adjacent first parking space corner points in the image of the exterior scene on the side of the vehicle, and detects whether an obstacle is present in the area between the two first parking space corner points based on the image of the exterior scene on the side of the vehicle. When there is a water stain or weed in the area between the two first parking space corner points, the water stain or weed tends to be falsely detected as an obstacle. At this point, the parking space detection device uses the ultrasonic sensor to detect if there really is an obstacle in the area between the two parking space corner points. If the parking space detection device determines that there is no obstacle in the area between the two first parking space corner points, it may indicate that the presence of the water stain or weed or the like has affected the detection of the parking space detection device, and there is effectively no obstacle in the area between the two first parking space corner points. The parking space detection device determines the location of the first available parking space based on the line segment connecting the two first parking space corner points, wherein the central axis of the first available parking space passes through the midpoint of the line segment connecting the two first parking space corner points. It can be seen, by applying the embodiments of the present invention, an ultrasonic sensor and a vision sensor are utilized to determine a parking space, which can reduce parking spaces missed by the detection and enhance success rate of automatic parking.

### Brief Description of Drawings

In order to make the technical aspects of the embodiments of the present invention more apparent, the drawings used in the embodiments of the present invention will now be described briefly. Obviously, the drawings set forth below are indicative of but a few of the embodiments of the invention. Other drawings may be obtained by those skilled in the art from the following drawings without inventive efforts.
FIG. 1 is a flow chart illustrating a parking space detection method in accordance with an embodiment of the present invention;
FIG. 2 is a flow chart illustrating another parking space detection method in accordance with an embodiment of the present invention;
FIG. 3 is a schematic structural view of a parking space detection device in accordance with an embodiment of the present invention;
FIG. 4 is a schematic structural view of another parking space detection device in accordance with an embodiment of the present invention;
FIG. 5 is a schematic structural view of yet another parking space detection device in accordance with an embodiment of the present invention;
FIG. 6 is a schematic diagram illustrating an exemplary application of a parking space detection method in accordance with an embodiment of the present invention;
FIG. 7 is a schematic diagram of an image of an exterior scene on one side of a vehicle in accordance with an embodiment of the present invention.

### Detailed Description

Technical aspects of the embodiments of the present invention will now be described more fully and clearly with reference to the drawings of the embodiments of the present invention. Apparently, the illustrated embodiments are merely a few, instead of all, of the embodiments of the invention. Any other embodiments obtained based on the embodiments of the present invention by those skilled in the art without creative efforts are deemed as falling within the scope of the present invention.

It is to be noted that, as utilized in this description and the claims, terms "first," "second," "third," "fourth" and the like are intended to distinguish different objects, not to describe specific ordering. Terms "comprise," "include," "have," "with," and variations thereof are intended to be inclusive. For example, a process, method, system, article, or device that comprises a list of steps or units is not necessarily limited to those steps or units expressly listed, but may include other steps or units not expressly listed or inherent to such process, method, article, or device.

The embodiments of the present invention disclose a parking space detection method and device, which can reduce parking spaces missed by detection and enhance the success rate of automatic parking. The detailed description is set forth below in connection with the drawings.

### First Embodiment

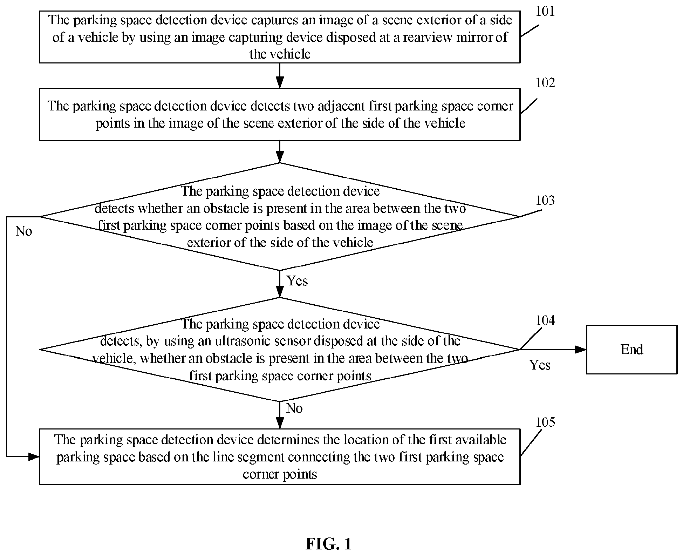

Referring to FIG. 1, FIG. 1 is a flow chart illustrating a parking space detection method in accordance with an embodiment of the present invention. As shown in FIG. 1, the method may include the following steps.

At 101, a parking space detection device captures an image of an exterior scene on one side of a vehicle using an image capturing device disposed at a rear-view mirror of the vehicle.

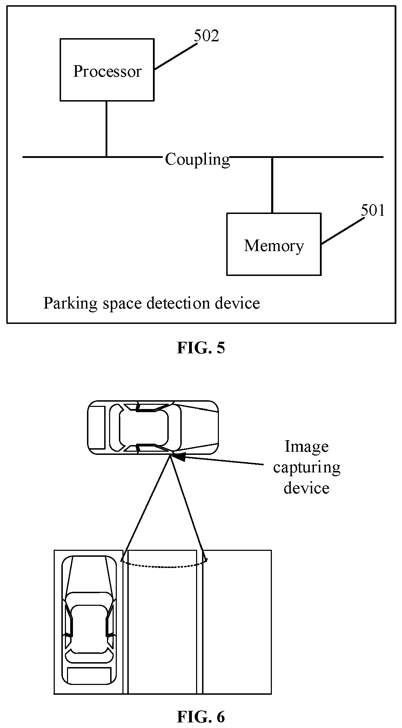

In an embodiment of the present invention, in addition to the rear-view mirror of the vehicle, the image capturing device that captures the image of the exterior scene on the side of the vehicle can be disposed at other portions on both sides of the vehicle. The embodiments of the present invention herein are described in connection with an image capturing device disposed at the rear-view mirror of the vehicle. Image capturing devices disposed at the rear-view mirrors of the vehicle can capture images of scenes exterior of both sides of the vehicle. Embodiments of the present invention are illustrated herein in connection with an image of a scene exterior of one side of the vehicle. The parking space detection device captures an exterior scene on the side of the vehicle by the image capturing device disposed at the rear-view mirror of the vehicle, to obtain an image of the exterior scene on the side of the vehicle. Referring to FIG. 6, as shown in FIG. 6, FIG. 6 is a schematic diagram illustrating an exemplary application of a parking space detection method in accordance with an embodiment of the present invention. When the vehicle is to detect a parking space, the image capturing device captures the exterior scene on the side of the vehicle, so as to obtain the image of the exterior scene on the side of the vehicle.

In an embodiment of the present invention, in the process that the parking space detection device captures the image of the exterior scene on the side of the vehicle through the image capturing device disposed at the rear-view mirror of the vehicle, since the vehicle is moving relatively fast during this process, typically within 20 km/h, the driving of the vehicle is controlled by the user to ensure parking safety.

As an alternative embodiment, in the process that the parking space detection device captures the image of the exterior scene on the side of the vehicle through the image capturing device disposed at the rear-view mirror of the vehicle, the vehicle travels forward at a certain speed, and the parking space detection device may emit ultrasonic waves at a specified frequency using an ultrasonic sensor disposed at the front of the vehicle. If an echo is received, indicating an obstacle is in front of the vehicle, possibly a sudden passing pedestrian or vehicle, the parking space detection device suspends the driving of the vehicle. By applying the embodiment described above, if there is a pedestrian or another vehicle suddenly intruding in front of the vehicle during the detection of the parking space, the parking space detection device controls the vehicle to pause driving so that parking safety can be assured.

At 102, the parking space detection device detects two adjacent first parking space corner points in the image of the exterior scene on the side of the vehicle.

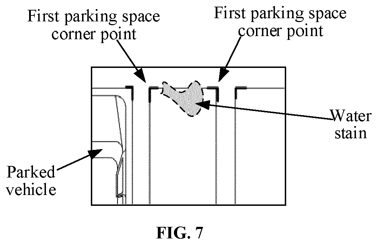

The parking space detection device first detects all parking space corner points in the image of the exterior scene on the side of the vehicle, and then selects two adjacent parking space corner points with the greatest separation, which are determined as the first parking space corner points. The parking space corner points are the intersections of lines defining the parking space. A parking space generally has four corner points. Referring to FIG. 7, FIG. 7 is a schematic diagram of an image of an exterior scene on one side of a vehicle in accordance with an embodiment of the present invention. As shown in FIG. 7, the parking space detection device determines the two adjacent parking space corner points with the greatest separation in the image of the exterior scene on the side of the vehicle as the first parking space corner points.

In an embodiment of the present invention, the parking space detection device may collect a large number of parking space image samples, and train a parking space model with these parking space image samples. The parking space detection device then inputs the image of the exterior scene on the side of the vehicle into the parking space model for performing a convolution operation to obtain a plurality of features, and the parking space corner points can be detected from the plurality of features according to a preset feature or features.

As an alternative embodiment, the parking space detection device detects two adjacent first parking space corner points in the image of the exterior scene on the side of the vehicle in the following way. The parking space detection device captures the image of the exterior scene on the side of the vehicle by the image capturing device disposed at a rear-view mirror of the vehicle. Next, the parking space detection device detects all parking space corner points in the image of the exterior scene on the side of the vehicle. With every two adjacent parking space corner points as a group, the parking space detection device then calculates the distance between the parking space corner points in each group. At last, the parking space detection device determines the two parking space corner points in a group having the greatest distance as the first parking space corner points. By applying the above embodiment, the width of the parking space resulting from the two first parking space corner points can be the greatest, thereby improving parking safety.

At 103, the parking space detection device detects whether an obstacle is present in the area between the two first parking space corner points based on the image of the exterior scene on the side of the vehicle. If so, the method proceeds to step 104; and if not, the method proceeds to step 105.

As an alternative embodiment, the parking space detection device may determine whether an obstacle is present in the area between the two first parking space corner points based on edge information of the area between the two first parking space corner points in the image of the exterior scene on the side of the vehicle. The edge information is the distribution of pixels that make up the outlines of various graphs in the image of the exterior scene on the side of the vehicle. A higher density of the pixels distribution indicates a greater complexity of the edge information. Conversely, a lower density of the pixels distribution indicates a smaller complexity of the edge information. When it is determined that the complexity of the edge information of the area between the two first parking space corner points is greater than preset complexity of edge information of vacant parking spaces, it indicates that there is an obstacle in the area between the two first parking space corner points. Conversely, if the complexity of the edge information of the area between the two first parking space corner points is smaller than or equal to the preset complexity of the edge information of vacant parking spaces, it indicates that there is no obstacle in the area between the two first parking space corner points. By applying the embodiment described above, the efficiency of detection of obstacles can be improved.

At 104, the parking space detection device detects, using an ultrasonic sensor disposed at the side of the vehicle, whether an obstacle is present in the area between the two first parking space corner points. If so, the method proceeds to step 105; and if not, the method ends.

In an embodiment of the present invention, the ultrasonic sensor disposed at the side of the vehicle may be disposed at the left side of the vehicle or at the right side of the vehicle. When the parking space detection device captures an image of a scene exterior of the left side of the vehicle by an image capturing device disposed at a rear-view mirror of the vehicle, the parking space detection device uses an ultrasonic sensor disposed at the left side of the vehicle to detect whether an obstacle is present in the area between two first parking space corner points. When the parking space detection device captures an image of a scene exterior of the right side of the vehicle by an image capturing device disposed at a rear-view mirror of the vehicle, the parking space detection device uses an ultrasonic sensor disposed at the right side of the vehicle to detect whether an obstacle is present in the area between two first parking space corner points.

In an embodiment of the present invention, after detecting based on the image of the exterior scene on the side of the vehicle that there is an obstacle in the area between the two first parking space corner points, the parking space detection devices proceeds to detect whether an obstacle is present in the area between the two first parking space corner points using the ultrasonic sensor disposed at the side of the vehicle. It can be appreciate that when there is a water stain or weed in the area between the two first parking space corner points, the parking space detection device tends to falsely determines that there is an obstacle in the area between the two first parking space corner points. In fact, however, there is no obstacle in the area between the two first parking space corner points, it is just because that the detection has been affected by the water stain or weed. At this point, the parking space detection device proceeds to detect, using the ultrasonic sensor disposed at the side of the vehicle, if there is an obstacle in the area between the two first parking space corner points. This allows for an improved accuracy of detection and reduced parking spaces missed by the detection.

At 105, the parking space detection device determines the location of the first available parking space based on the line segment connecting the two first parking space corner points.

In the embodiment of the present invention, the central axis of the first available parking space passes through the midpoint of the line segment connecting the two first parking space corner points.

As an alternative embodiment, the parking space detection device may determine the location of the first available parking space based on the line segment connecting the two first parking space corner points in the following way. The parking space detection device constructs the perpendicular bisector of the line segment connecting the two first parking space corner points, and determines the perpendicular bisector as the central axis of the first available parking space. Then, the parking space detection device determines the location of the first available parking space based on the central axis, the line segment connecting the two first parking space corner points and the length of the vehicle, in such a manner that the width of the line segment connecting the two first parking space corner points is used as the width of the first available parking space and the length of the vehicle is used as the length of the first available parking space. By applying the embodiment described above, it is possible to ensure that the determined first available parking space allows for the parking of the vehicle, improving the parking safety.

As can be seen, in the method illustrated in FIG. 1, the parking space detection device detects the two adjacent first parking space corner points in the captured image of the exterior scene on the side of the vehicle, and then detects whether an obstacle is present in the area between the two first parking space corner points based on the image of the exterior scene on the side of the vehicle. If a detection indicates that there is an obstacle, it may be a false detection by the parking space detection device due to the presence of a water stain or weed or the like. At this point, the parking space detection device detects, using the ultrasonic sensor disposed at the side of the vehicle, if there really is an obstacle in the area between the two first parking space corner points. If no obstacle is present, it may indicate that the presence of the water or weed or the like has affected the detection by the parking space detection device, and there is effectively no obstacle in the area between the two first parking space corner points. The parking space detection device determines the location of the first available parking space based on the line segment connecting the two first parking space corner points. In this way, parking spaces missed by the detection can be reduced and the success rate of automatic parking can be enhanced.

### Second Embodiment

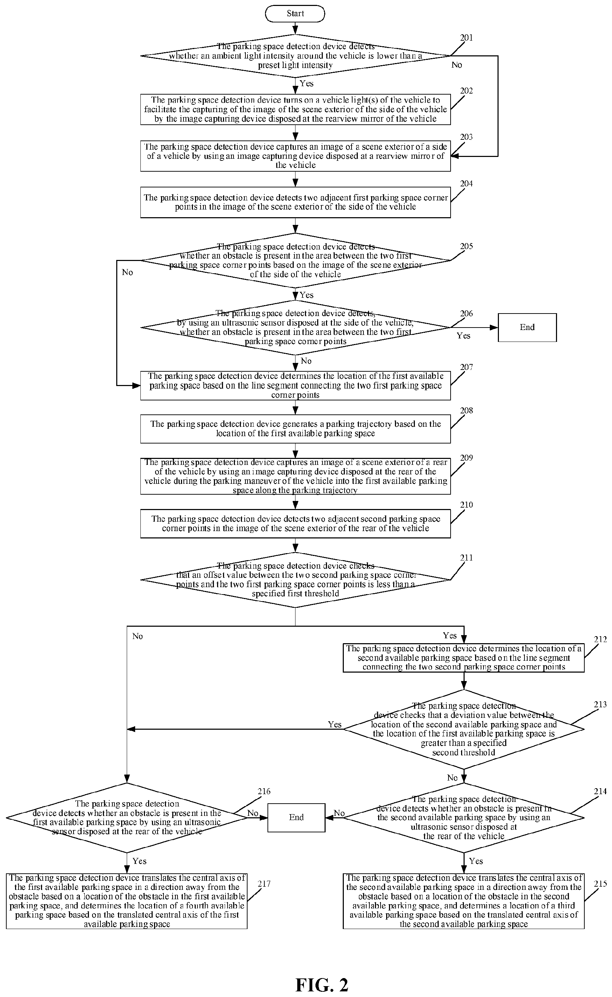

Referring to FIG. 2, FIG. 2 is a flow chart illustrating another parking space detection method in accordance with an embodiment of the present invention. As shown in FIG. 2, the method may include the following steps.

At 201, the parking space detection device detects whether an ambient light intensity around the vehicle is lower than a preset light intensity. If so, the method proceeds to step 202; and if not, the method proceeds to step 203.

In an embodiment of the present invention, when the ambient light intensity is lower, the capturing by the image capturing device will be affected. Therefore, when the ambient light intensity around the vehicle is lower than the preset light intensity, the parking space detection device turns on the vehicle's light(s) to compensate for the ambient light intensity around the vehicle, so as to facilitate the capturing of the image of the exterior scene on the side of the vehicle by the image capturing device disposed at the rear-view mirror of the vehicle.

At 202, the parking space detection device turns on a vehicle light(s) of the vehicle to facilitate the capturing of the image of the exterior scene on the side of the vehicle by the image capturing device disposed at the rear-view mirror of the vehicle.

As an alternative embodiment, the parking space detection device may have a light sensing module built therein, with which the parking space detection device may detect the ambient light intensity around the vehicle. As an example, the preset light intensity is 800 lx. When the parking space detection device detects that the ambient light intensity around the vehicle is 400 lx, indicating that the ambient light intensity is too low, the parking space detection device turns on the light(s) to compensate for the ambient light intensity around the vehicle. By applying the embodiment described above, when the ambient light intensity around the vehicle is too low, the parking space detection device turns on the vehicle's light(s), to ensure that the image capturing device at the rear-view mirror of the vehicle captures the image of the exterior scene on the side of the vehicle in a normal way.

At 203-207, steps 203-207 are the same as steps 101-105 in the first embodiment, and will not be repeated herein.

At 208, the parking space detection device generates a parking trajectory based on the location of the first available parking space.

In an embodiment of the present invention, after the location of the first available parking space is determined, a parking trajectory is established according to a preset rule starting with the current location of the center of the vehicle and ending with the center of the first available parking space, such that the vehicle is parked into the first available parking space, with the center of the vehicle being positioned at the center of the first available parking space.

At 209, the parking space detection device captures an image of a scene exterior of a rear of the vehicle using an image capturing device disposed at the rear of the vehicle during the parking maneuver of the vehicle into the first available parking space along the parking trajectory.

In an embodiment of the present invention, in the process that the vehicle is moved into the first available parking space along the parking trajectory, the speed of the vehicle is slow, typically less than 3 km/h, the driving of the vehicle is controlled by an on-board system so that the parking space detection device performs a further detection of the first available parking space.

As an alternative embodiment, in the process that the vehicle is moved into the first available parking space along the parking trajectory, the parking space detection device may record the environment behind the vehicle by the imaging capturing device disposed at the rear of the vehicle to obtain a video, and display the video on the center screen of the vehicle in real time for the user to view the situation behind the vehicle. By applying the embodiment described above, displaying the video of the environment behind the vehicle on the center screen during the parking of the vehicle can improve the user's parking experience.

At 210, the parking space detection device detects two adjacent second parking space corner points in the image of the scene exterior of the rear of the vehicle.

In an embodiment of the present invention, it can be appreciated that, the way that the parking space detection device detects two adjacent second parking space corner points in the image of the scene exterior of the rear of the vehicle may be the same as the way that the parking space detection device detects two adjacent first parking space corner points in the image of the exterior scene on the side of the vehicle, and will not be repeated herein.

At 211, the parking space detection device checks that an offset value between the two second parking space corner points and the two first parking space corner points is less than a specified first threshold. If so, the method proceeds to steps 212-215; and if not, the method proceeds to steps 216-217.

In an embodiment of the present invention, the offset value refers to the distance that the two second parking space corner points are offset from the two first parking space corner points.

At 212, the parking space detection device determines the location of a second available parking space based on the line segment connecting the two second parking space corner points.

In an embodiment of the present invention, the central axis of the second available parking space passes through the midpoint of the line segment connecting the two second parking space corner points.

In an embodiment of the present invention, it can be appreciated, the way that the parking space detection device determines the location of the second available parking space based on the line segment connecting the two second parking space corner points may be the same as the way that the parking space detection device determines the location of the first available parking space based on the line segment connecting the two first parking space corner points, and will not be repeated herein.

At 213, the parking space detection device checks that a deviation value between the location of the second available parking space and the location of the first available parking space is greater than a specified second threshold. If not, the method proceeds to steps 214-215; and if so, the method proceeds to steps 216-217.

In an embodiment of the present invention, the deviation value refers to the degree to which the position of the second available parking space deviates from the first available parking space.

At 214, the parking space detection device detects whether an obstacle is present in the second available parking space using an ultrasonic sensor disposed at the rear of the vehicle. If so, the method proceeds to step 215; and if not, the method ends.

At 215, the parking space detection device shifts the central axis of the second available parking space in a direction away from the obstacle based on a location of the obstacle in the second available parking space, and determines a location of a third available parking space based on the shifted central axis of the second available parking space.

In an embodiment of the present invention, in a case where the parking space detection device detects using an ultrasonic sensor disposed at the rear of the vehicle that an obstacle is present in the second available parking space, for example, there may be a pile or pillar is in the middle or rear of the second available parking space. In this case, the parking space detection device shifts the central axis of the second available parking space away from the pile or pillar depending on the location of the pile or pillar. The distance of the translation may be equal to the distance of the pile or pillar to the edge of the second available parking space. In this way, the third available parking space determined from the shifted central axis can be made free of piles or pillars.

As an alternative embodiment, the parking space detection device may record a driving trajectory starting from where the vehicle begins to where the vehicle is successfully parked. When the user starts the vehicle again, the parking space detection device may control the vehicle to drive out of the parking space according to the recorded driving trajectory. By applying the embodiment described above, when the user restarts the vehicle, the parking space detection device can control the vehicle to drive out along the recorded driving trajectory, which can improve the driving experience of the user.

At 216, the parking space detection device detects whether an obstacle is present in the first available parking space using an ultrasonic sensor disposed at the rear of the vehicle. If so, the method proceeds to step 217; and if not, the method ends.

At step 217, the parking space detection device shifts the central axis of the first available parking space in a direction away from the obstacle based on a location of the obstacle in the first available parking space, and determines the location of a fourth available parking space based on the shifted central axis of the first available parking space.

In an embodiment of the present invention, the way at step 216 that the parking space detection device shifts the central axis of the first available parking space in a direction away from the obstacle based on a location of the obstacle in the first available parking space and determines the location of the fourth available parking space based on the shifted central axis of the first available parking space may be the same as the way at step 215 that the parking space detection device shifts the central axis of the second available parking space in a direction away from the obstacle based on the location of the obstacle in the second available parking space and determines the location of the third available parking space based on the shifted central axis of the second available parking space, and will not be repeated herein.

As can be seen, in the method described in FIG. 2, the parking space detection device detects the two adjacent first parking space corner points in the captured image of the exterior scene on the side of the vehicle, and then detects whether an obstacle is present in the area between the two first parking space corner points based on the image of the exterior scene on the side of the vehicle. If a detection indicates that there is an obstacle, it may be a false detection by the parking space detection device due to the presence of a water stain or weed or the like. At this point, the parking space detection device detects, using the ultrasonic sensor disposed at the side of the vehicle, whether there really is an obstacle in the area between the two first parking space corner points. If no obstacle is present, it may indicate that the presence of the water or weed or the like has affected the detection by the parking space detection device, and there is effectively no obstacle in the area between the two first parking space corner points. The parking space detection device determines the location of the first available parking space based on the line segment connecting the two first parking space corner points. In this way, parking spaces missed by detection can be reduced and the success rate of automatic parking can be enhanced. In addition, in the method illustrated in FIG. 2, during the parking maneuver of the vehicle into the first available parking space along the parking trajectory, the final position of the parking space is determined by detecting with the ultrasonic sensor disposed at the rear of the vehicle and by capturing the image of the scene exterior of the rear of the vehicle with the image capturing device disposed at the rear of the vehicle. This can improve parking safety and the accuracy of parking space detection.

### Third Embodiment

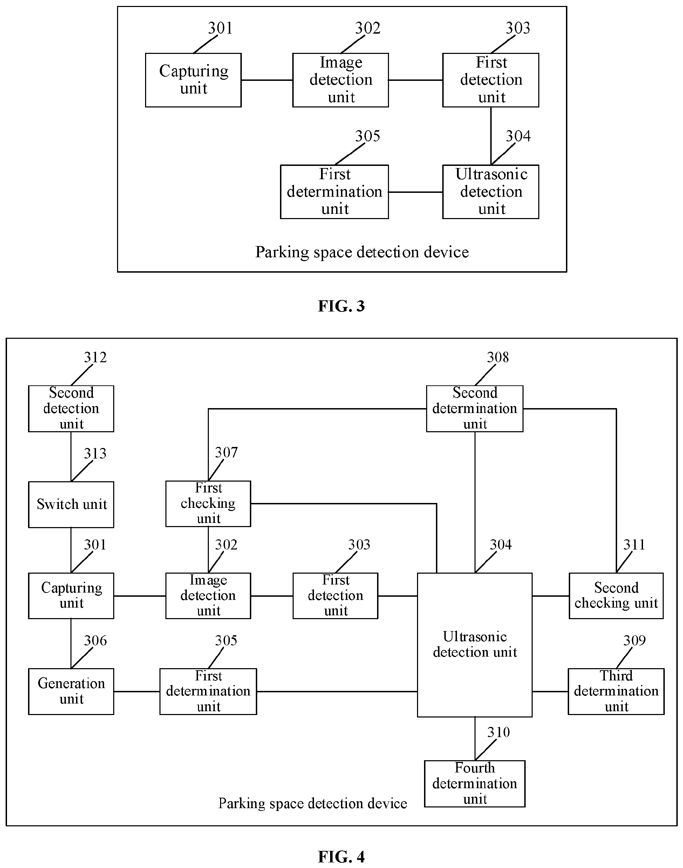

Referring to FIG. 3, FIG. 3 is a schematic structural view of a parking space detection device in accordance with an embodiment of the present invention. As shown in FIG. 3, the parking space detection device may comprise:
an image capturing unit 301, configured to capture an image of an exterior scene on one side of a vehicle by an image capturing device disposed at a rear-view mirror of the vehicle;
an image detection unit 302, configured to detect two adjacent first parking space corner points in the image of the exterior scene on the side of the vehicle;
a first detection unit 303, configured to detect whether an obstacle is present in an area between the two first parking space corner points based on the image of the exterior scene on the side of the vehicle;
an ultrasonic detection unit 304, configured to, if the first detection unit 303 detects that the obstacle is present in the area between the two first parking space corner points, detect whether an obstacle is present in the area between the two first parking space corner points using an ultrasonic sensor disposed at the side of the vehicle; and
a first determination unit 305, configured to, if the ultrasonic detection unit 304 detects using the ultrasonic sensor at the side of the vehicle that no obstacle is present in the area between the two first parking space corner points, determine a location of a first available parking space based on a line segment connecting the two first parking space corner points.

In the embodiment of the present invention, the central axis of the first available parking space passes through the midpoint of the line segment connecting the two first parking space corner points.

As an alternative embodiment, in the process that the capturing unit 301 captures the image of the exterior scene on the side of the vehicle through the image capturing device disposed at the rear-view mirror of the vehicle, the vehicle travels forward at a certain speed, and the ultrasonic detection unit 304 may emit ultrasonic waves at a specified frequency using an ultrasonic sensor disposed at the front of the vehicle. If an echo is received, indicating an obstacle is in front of the vehicle, possibly a sudden passing pedestrian or vehicle, and the vehicle is suspended from moving. By applying the above described embodiment, if there is a pedestrian or another vehicle suddenly intruding in front of the vehicle during the detection of the parking space, the vehicle will be controlled to pause driving so that parking safety can be assured.

As an alternative embodiment, the image detection unit 302 detects two adjacent first parking space corner points in the image of the exterior scene on the side of the vehicle in the following way. The capturing unit 301 captures the image of the exterior scene on the side of the vehicle by the image capturing device disposed at a rear-view mirror of the vehicle. Next, the image detection unit 302 detects all parking space corner points in the image of the exterior scene on the side of the vehicle. With every two adjacent parking space corner points as a group, the distance between the parking space corner points in each group is then calculated; and at last the two parking space corner points in a group having the greatest distance are determined as the first parking space corner points. By applying the above embodiment, the width of the parking space resulting from the two first parking space corner points can be the greatest, thereby improving parking safety.

As an alternative embodiment, the first detection unit 303 may determine whether an obstacle is present in the area between the two first parking space corner points based on edge information of the area between the two first parking space corner points in the image of the exterior scene on the side of the vehicle. The edge information is the distribution of pixels that make up the outlines of the image. A higher density of the pixels distribution indicates a greater complexity of the edge information. Conversely, a lower density of the pixels distribution indicates a smaller complexity of the edge information. If the complexity of the edge information of the area between the two first parking space corner points is greater than preset complexity of edge information of vacant parking spaces, it indicates that there is an obstacle in the area between the two first parking space corner points. Conversely, if the complexity of the edge information of the area between the two first parking space corner points is smaller than or equal to the preset complexity of the edge information of vacant parking spaces, it indicates that there is no obstacle in the area between the two first parking space corner points. By applying the embodiment described above, the efficiency of detection of obstacles can be improved.

As an alternative embodiment, the first determination unit 305 may determine the location of the first available parking space based on the line segment connecting the two first parking space corner points in the following way. The first determination unit 305 constructs the perpendicular bisector of the line segment connecting the two first parking space corner points, and determines the perpendicular bisector as the central axis of the first available parking space. Then, the first determination unit determines the location of the first available parking space based on the central axis, the line segment connecting the two first parking space corner points and the length of the vehicle, in such a manner that the width of the line segment connecting the two first parking space corner points is used as the width of the first available parking space and the length of the vehicle is used as the length of the first available parking space. By applying the embodiment described above, it is possible to ensure that the determined first available parking space allows for the parking of the vehicle, thereby improving parking safety.

As can be seen, with the parking space detection device as illustrated in FIG. 3, the image detection unit 302 detects the two adjacent first parking space corner points in the image of the exterior scene on the side of the vehicle captured by the capturing unit 301, and then the first detection unit 303 detects whether an obstacle is present in the area between the two first parking space corner points based on the image of the exterior scene on the side of the vehicle. If a detection indicates that there is an obstacle, it may be a false detection by the parking space detection device due to the presence of a water stain or weed or the like. At this point, the ultrasonic detection unit 304 detects, using the ultrasonic sensor disposed at the side of the vehicle, whether there really is an obstacle in the area between the two first parking space corner points. If no obstacle is present, it may indicate that the presence of the water or weed or the like has affected the detection by the parking space detection device, and there is effectively no obstacle in the area between the two first parking space corner points. The first determination unit 305 determines the location of the first available parking space based on the line segment connecting the two first parking space corner points. In this way, parking spaces missed by the detection can be reduced and the success rate of automatic parking can be enhanced.

### Fourth Embodiment

Referring to FIG. 4, FIG. 4 is a schematic structural view of another parking space detection device in accordance with an embodiment of the present invention. The detection device shown in FIG. 4 is further optimized from the parking space detection device illustrated in FIG. 3. Compared with the parking space detection device illustrated in FIG. 3, the parking space detection device in FIG. 4 may further comprise:
a generation unit 306, configured to generate a parking trajectory based on the location of the first available parking space, after the first determination unit 305 determines the location of the first available parking space based on the line segment connecting the two first parking space corner points;
the capturing unit 301, further configured to capture an image of a scene exterior of a rear of the vehicle by an image capturing device disposed at the rear of the vehicle during a parking maneuver of the vehicle into the first available parking space along the parking trajectory;
the image detection unit 302, further configured to detect two adjacent second parking space corner points in the image of the scene exterior of the rear of the vehicle;
a first checking unit 307, configured to check whether an offset value between the two second parking space corner points and the two first parking space corner points is less than a specified first threshold;
a second determination unit 308, configured to, if the first checking unit 307 determines that the offset value between the two second parking space corner points and the two first parking space corner points is less than the specified first threshold, determine a location of a second available parking space based on a line segment connecting the two second parking space corner points;
the ultrasonic detection unit 304, further configured to detect whether an obstacle is present in the second available parking space using an ultrasonic sensor disposed at the rear of the vehicle;
a third determination unit 309, configured to, if the ultrasonic detection unit 304 detects that the obstacle is present in the second available parking space, shift the central axis of the second available parking space in a direction away from the obstacle based on a location of the obstacle in the second available parking space, and determine a location of a third available parking space based on the shifted central axis of the second available parking space;
the ultrasonic detection unit 304, further configured to, if the first checking unit 307 determines that the offset value between the two second parking space corner points and the two first parking space corner points is greater than or equal to the specified first threshold, detect whether an obstacle is present in the first available parking space using the ultrasonic sensor disposed at the rear of the vehicle;
a fourth determination unit 310, configured to, if the ultrasonic detection unit 304 detects that the obstacle is present in the first available parking space, shift the central axis of the first available parking space in a direction away from the obstacle based on a location of the obstacle in the first available parking space, and determine a location of a fourth available parking space based on the shifted central axis of the first available parking space;
a second checking unit 311, configured to check whether a deviation value between the location of the second available parking space and the location of the first available parking space is greater than a specified second threshold, after the second determination unit 308 determines the location of the second available parking space based on the line segment connecting the two second parking space corner points;
the ultrasonic detection unit 304, further configured to, if the second checking unit 311 determines that the deviation value between the location of the second available parking space and the location of the first available parking space is greater than the specified second threshold, detect whether an obstacle is present in the first available parking space using the ultrasonic sensor disposed at the rear of the vehicle;
wherein the ultrasonic detection unit 304 detects whether an obstacle is present in the second available parking space using an ultrasonic sensor disposed at the rear of the vehicle in a way
the ultrasonic detection unit 304 detects whether an obstacle is present in the second available parking space using the ultrasonic sensor disposed at the rear of the vehicle, if the second checking unit 311 determines that the deviation value between the location of the second available parking space and the location of the first available parking space is less than or equal to the specified second threshold;
a second detection unit 312, configured to, prior to that the capturing unit 301 captures the image of the exterior scene on the side of the vehicle by the image capturing device disposed at the rear-view mirror of the vehicle, detect whether an ambient light intensity around the vehicle is lower than a preset light intensity; and
a switch unit 313, configured to turn on lights of the vehicle to facilitate the capturing of the image of the exterior scene on the side of the vehicle by the image capturing device disposed at the rear-view mirror of the vehicle, when the second detection unit 312 detects that the ambient light intensity outside a side of the vehicle is lower than the preset light intensity.

In an embodiment of the present invention, the offset value refers to the distance that the two second parking space corner points are offset from the two first parking space corner points.

In the embodiment of the present invention, the central axis of the second available parking space passes through the midpoint of the line segment connecting the two second parking space corner points.

In an embodiment of the present invention, the deviation value refers to the degree to which the position of the second available parking space deviates from that of the first available parking space.

As an alternative embodiment, the second detection unit 312 may have a light sensing module built therein, with which the second detection unit 312 may detect the ambient light intensity around the vehicle. As an example, the preset light intensity is 800 lx. When the second detection unit 312 detects that the ambient light intensity around the vehicle is 400 lx, indicating that the ambient light intensity is too low, and the switch unit 313 turns on the light(s) to compensate for the ambient light intensity around the vehicle. By applying the embodiment described above, when the second detection unit 312 detects that the ambient light intensity around the vehicle is too low, the switch unit 313 turns on the vehicle's light(s), to ensure that the image capturing device on the rear-view mirror of the vehicle captures the image of the exterior scene on the side of the vehicle in a normal way.

As an alternative embodiment, in the process that the vehicle is moved into the first available parking space along the parking trajectory, the capturing unit 301 may record the environment behind the vehicle by the imaging capturing device disposed at the rear of the vehicle to obtain a video, and display the video on the center screen of the vehicle in real time for the user to view the situation behind the vehicle. By applying the embodiment described above, displaying the video of the environment behind the vehicle on the center screen during the parking of the vehicle can improve the user's parking experience.

As an alternative embodiment, the third determination unit 309 or the fourth determination unit 310 may record a driving trajectory starting from where the vehicle begins to where the vehicle is successfully parked. When the user starts the vehicle again, the vehicle may be controlled to drive out of the parking space according to the recorded driving trajectory. By applying the embodiment described above, when the user restarts the vehicle, the third determination unit 309 or the fourth determination unit 310 can control the vehicle to drive out along the recorded driving trajectory, which can improve the driving experience of the user.

As can be seen, with the parking space detection device as illustrated in FIG. 4, the image detection unit 302 detects the two adjacent first parking space corner points in the image of the exterior scene on the side of the vehicle captured by the capturing unit 301, and then the first detection unit 303 detects whether an obstacle is present in the area between the two first parking space corner points based on the image of the exterior scene on the side of the vehicle. If a detection indicates that there is an obstacle, it may be a false detection by the parking space detection device due to the presence of a water stain or weed or the like. At this point, the ultrasonic detection unit 304 detects, using the ultrasonic sensor disposed at the side of the vehicle, whether there really is an obstacle in the area between the two first parking space corner points. If no obstacle is present, it may indicate that the presence of the water or weed or the like affects the detection by the parking space detection device, and there is effectively no obstacle in the area between the two first parking space corner points. The first determination unit 305 determines the location of the first available parking space based on the line segment connecting the two first parking space corner points. In this way, parking spaces missed by the detection can be reduced and the success rate of automatic parking can be enhanced. In addition, with the parking space detection device illustrated in FIG. 4, during the parking maneuver of the vehicle into the first available parking space along the parking trajectory, the final position of the parking space is determined by detecting with the ultrasonic sensor disposed at the rear of the vehicle and by capturing the image of the scene exterior of the rear of the vehicle with the image capturing device disposed at the rear of the vehicle. This can improve parking safety and the accuracy of parking space detection.

### Fifth Embodiment

Referring to FIG. 5, FIG. 5 is a schematic structural view of yet another parking space detection device in accordance with an embodiment of the present invention. As shown in FIG. 5, the parking space detection device may comprise:
a memory device 501 having stored thereon executable program codes; and
a processor 502 coupled with the memory 501,
wherein the processor 502 is configured to execute the executable program codes stored on the memory 501 to carry out any of the parking space detection methods of FIG. 1 to FIG. 2.

An embodiment of the present invention discloses a computer-readable storage medium having stored thereon a computer program, which causes a computer to carry out any of the parking space detection methods of FIG. 1 to FIG. 2.

An embodiment of the present invention further discloses an application distributing platform for distributing a computer program product, wherein the computer program product, when executed on a computer, causes the computer to carry out some or all of the steps of any of the methods above.

It is to be understood that reference to "one embodiment" or" an embodiment" throughout this specification means that specific features, structures or characteristics described in connection with the embodiment is included in at least one embodiment of the present invention. Thus, the phrases "in one embodiment" or "in an embodiment" used throughout this specification are not necessarily referring to the same embodiment. In addition, the specific features, structures or characteristics may be combined in any suitable manner in one or more embodiments. Those skilled in the art will also appreciate that the embodiments described herein are alternative embodiments, not all illustrated acts or modules are required to implement the present invention.

In the various embodiments of the present invention, it should be understood that the order of execution of processes described above is not necessarily intended to indicate that the processes must be executed in this order. The processes should be executed in an order determined in terms of their functions and inherent logic. The order of execution of the processes described herein should not construed as any limitations upon the implementation of the embodiments of the present invention.

The units described above as separate components may or may not be physically separate, the components shown as units may or may not be physical units. That is, they may located in one place, or may be distributed across multiple network units. Some or all of the units may be selected as desired to achieve the objectives of the present embodiments.

In addition, functional units in the embodiments of the present invention may be integrated in a single processing unit or may be physically exist separately, or two or more units may be integrated in a single unit. The integrated units described above may be embodied as either hardware or software functional units.

These integrated units, if embodied as software functional units and sold or used as a stand-alone product, may be stored in a computer accessible storage. Based on such understanding, the technical aspects of the present invention in essence, i.e., the part of the present invention that contributes to the prior art, or all or part of the technical aspects may be embodied as a software product stored in a storage comprising a plurality of requests to cause a computer device (which may be a personal computer, a server or a network device or the like, and in particular a processor in the computer device) to perform some or all of the steps of the embodiments of the present invention.

In the embodiments provided by the present invention, it should be understood that "B corresponding to A" means that B is associated with A and B can be determined based on A. It should also be understood, however, that determining B based on A does not mean determining B based on only A, but B may also be determined based on A and/or other information.

In various embodiments of the present invention, it should be understood that the wording of "A and/or B" means that either A or B exist individually or both A and B exist at the same time.

Those skilled in the art will appreciate that all or a portion of the methods of the embodiments described above may be performed by associated hardware instructed by a program that may be stored in a computer-readable storage medium. The storage medium includes read-only memory (ROM), random access memory (RAM), programmable read-only memory (PROM), erasable programmable read-only memory (EPROM), one-time programmable read-only memory (OTPROM), electrically erasable programmable read-only memory (EEPROM), compact disc read-only memory (CD-ROM) or other optical disk storage, magnetic disk storage, magnetic tape storage, or any other computer-readable medium for carrying or storing data.

The parking space detection methods and devices are provided by the embodiments of the present invention have been described in detail, where specific examples are used to describe the principles and embodiments of the present invention. The above description of the embodiments is only for the purpose of aiding in the understanding of methodologies and the core ideas of the present invention. In summary, this specification should not be construed as a limitation to the present invention.

## Claims

1. A parking space detection method, comprising the steps of:
capturing (101, 203) an image of an exterior scene on one side of a vehicle by an image capturing device disposed at a rear-view mirror of the vehicle;
detecting (102, 204) two adjacent first parking space corner points in the image of the exterior scene on the side of the vehicle;
detecting (103, 205) whether an obstacle is present in an area between the two first parking space corner points based on the image of the exterior scene on the side of the vehicle;
if an obstacle is present, detecting (104, 206) whether the obstacle is present in the area between the two first parking space corner points using an ultrasonic sensor disposed at the side of the vehicle; and
if the ultrasonic sensor at the side of the vehicle detects that no obstacle is present in the area between the two first parking space corner points, determining (105, 207), with reference to a line segment connecting the two first parking space corner points, a location of a first available parking space, such that a central axis of the first available parking space passes through a midpoint of the line segment.

2. The method of claim 1, the method further comprising, after determining the location of the first available parking space:
generating (208) a parking trajectory based on the location of the first available parking space;
capturing (209) a second image of a scene exterior of a rear of the vehicle by the image capturing device disposed at the rear of the vehicle during a parking maneuver of the vehicle into the first available parking space along the parking trajectory;
detecting (210) two adjacent second parking space corner points in the second image of the scene exterior of the rear of the vehicle;
checking (211) whether an offset value between the two second parking space corner points and the two first parking space corner points is less than a specified first threshold, wherein the offset value refers to a distance that the two second parking space corner points are offset from the two first parking space corner points;
if the offset value is less than the specified first threshold, determining (212), with reference to a line segment connecting the two second parking space corner points, a location of a second available parking space, such that a central axis of the second available parking space passes through a midpoint of the line segment connecting the two second parking space corner points;
detecting (214) whether an obstacle is present in the second available parking space using an ultrasonic sensor disposed at the rear of the vehicle; and
if an obstacle is present, shifting (215) the central axis of the second available parking space in a direction away from the obstacle based on a location of the obstacle in the second available parking space, and determining a location of a third available parking space based on the shifted central axis of the second available parking space.

3. The method of claim 2, further comprising:
if the offset value between the two second parking space corner points and the two first parking space corner points is greater than or equal to the specified first threshold, detecting (216) whether an obstacle is present in the first available parking space using the ultrasonic sensor disposed at the rear of the vehicle; and
if an obstacle is present, shifting (217) the central axis of the first available parking space in a direction away from the obstacle based on a location of the obstacle in the first available parking space, and determining a location of a fourth available parking space based on the shifted central axis of the first available parking space.

4. The method of claim 3, the method further comprising, after determining the location of the second available parking space:
checking (213) whether a deviation value between the location of the second available parking space and the location of the first available parking space is greater than a specified second threshold;
if the deviation value between the location of the second available parking space and the location of the first available parking space is greater than the specified second threshold, performing the step of detecting (216) whether an obstacle is present in the first available parking space using the ultrasonic sensor disposed at the rear of the vehicle; and
if the deviation value between the location of the second available parking space and the location of the first available parking space is less than or equal to the specified second threshold, performing the step of detecting (214) whether an obstacle is present in the second available parking space using the ultrasonic sensor disposed at the rear of the vehicle.

5. The method of one of claims 1 to 4, the method further comprising, before capturing the image of the exterior scene on the side of the vehicle by the image capturing device disposed at the rear-view mirror of the vehicle:
detecting (201) whether an ambient light intensity around the vehicle is lower than a preset light intensity; and
if so, turning (202) lights of the vehicle on to facilitate the capturing of the image of the exterior scene on the side of the vehicle by the image capturing device disposed at the rear-view mirror of the vehicle.

6. The method of one of claims 1 to 5, wherein the step of detecting (103, 205) whether an obstacle is present in an area between the two first parking space corner points based on the image of the exterior scene on the side of the vehicle further comprises:
determining whether an obstacle is present in the area between the two first parking space corner points based on edge information of the area between the two first parking space corner points in the image,
wherein the edge information is the distribution of pixels that make up outlines of various graphs in the image of the exterior scene on the side of the vehicle.

7. A parking space detection device, comprising:
an image capturing unit (301), configured to capture an image of an exterior scene on one side of a vehicle by an image capturing device disposed at a rear-view mirror of the vehicle;
an image detection unit (302), configured to detect two adjacent first parking space corner points in the image of the exterior scene on the side of the vehicle;
a first detection unit (303), configured to detect whether an obstacle is present in an area between the two first parking space corner points based on the image of the exterior scene on the side of the vehicle;
an ultrasonic detection unit (304), configured to, if the first detection unit detects that an obstacle is present in the area between the two first parking space corner points, detect whether an obstacle is present in the area between the two first parking space corner points using an ultrasonic sensor disposed at the side of the vehicle; and
a first determination unit (305), configured to, if the ultrasonic detection unit detects using the ultrasonic sensor at the side of the vehicle that no obstacle is present in the area between the two first parking space corner points, determine, with reference to a line segment connecting the two first parking space corner points, a location of a first available parking space, such that a central axis of the first available parking space passes through a midpoint of the line segment.

8. The parking space detection device of claim 7, further comprising:
a generation unit (306), configured to generate a parking trajectory based on the location of the first available parking space, after the first determination unit determines the location of the first available parking space with reference to the line segment connecting the two first parking space corner points;
the capturing unit, further configured to capture a second image of a scene exterior of a rear of the vehicle by the image capturing device disposed at the rear of the vehicle during a parking maneuver of the vehicle into the first available parking space along the parking trajectory;
the image detection unit, further configured to detect two adjacent second parking space corner points in the second image of the scene exterior of the rear of the vehicle;
a first checking unit (307), configured check whether an offset value between the two second parking space corner points and the two first parking space corner points is less than a specified first threshold, wherein the offset value refers to a distance that the two second parking space corner points are offset from the two first parking space corner points;
a second determination unit (308), configured to, if the first checking unit determines that the offset value between the two second parking space corner points and the two first parking space corner points is less than the specified first threshold, determine a location of a second available parking space with reference to a line segment connecting the two second parking space corner points, such that a central axis of the second available parking passes through a midpoint of the line segment connecting the two second parking space corner points;
the ultrasonic detection unit, further configured to detect whether an obstacle is present in the second available parking space using an ultrasonic sensor disposed at the rear of the vehicle; and
a third determination unit (309), configured to, if the ultrasonic detection unit detects that an obstacle is present in the second available parking space, shift the central axis of the second available parking space in a direction away from the obstacle based on a location of the obstacle in the second available parking space, and determine a location of a third available parking space based on the shifted central axis of the second available parking space.

9. The parking space detection device of claim 8, further comprising:
the ultrasonic detection unit, further configured to, if the first checking unit determines that the offset value between the two second parking space corner points and the two first parking space corner points is greater than or equal to the specified first threshold, detect whether an obstacle is present in the first available parking space using the ultrasonic sensor disposed at the rear of the vehicle; and
a fourth determination unit (310), configured to, if the ultrasonic detection unit detects that the obstacle is present in the first available parking space, shift the central axis of the first available parking space in a direction away from the obstacle based on a location of the obstacle in the first available parking space, and determine a location of a fourth available parking space based on the shifted central axis of the first available parking space.

10. The parking space detection device of claim 9, further comprising:
a second checking unit (311), configured to check whether a deviation value between the location of the second available parking space and the location of the first available parking space is greater than a specified second threshold, after the second determination unit determines the location of the second available parking space with reference to the line segment connecting the two second parking space corner points; and
the ultrasonic detection unit, further configured to, if the second checking unit determines that the deviation value between the location of the second available parking space and the location of the first available parking space is greater than the specified second threshold, detect whether an obstacle is present in the first available parking space using the ultrasonic sensor disposed at the rear of the vehicle;
wherein the ultrasonic detection unit is configured to detect whether an obstacle is present in the second available parking space using the ultrasonic sensor disposed at the rear of the vehicle in a way that:
the ultrasonic detection unit detects whether an obstacle is present in the second available parking space using the ultrasonic sensor disposed at the rear of the vehicle, if the second checking unit determines that the deviation value between the location of the second available parking space and the location of the first available parking space is less than or equal to the specified second threshold.

11. The parking space detection device of one of claims 7 to 10, further comprising:
a second detection unit (312), configured to, prior to that the capturing unit captures the image of the exterior scene on the side of the vehicle by the image capturing device disposed at the rear-view mirror of the vehicle, detect whether an ambient light intensity around the vehicle is lower than a preset light intensity; and
a switch unit (313), configured to turn lights of the vehicle on to facilitate the capturing of the image of the exterior scene on the side of the vehicle by the image capturing device disposed at the rear-view mirror of the vehicle, when the second detection unit detects that the ambient light intensity around the vehicle is lower than the preset light intensity.

12. The parking space detection device of one of claims 7 to 11, wherein the first detection unit (303) is further configured to determine whether an obstacle is present in the area between the two first parking space corner points based on edge information of the area between the two first parking space corner points in the image,
wherein, the edge information is the distribution of pixels that make up outlines of various graphs in the image of the exterior scene on the side of the vehicle.

## Patentansprüche

1. Parkplatzerkennungsverfahren, das die folgenden Schritte beinhaltet:
Aufnehmen (101, 203) eines Bildes einer Außenszene auf einer Seite eines Fahrzeugs durch ein an einem Rückspiegel des Fahrzeugs angeordnetes Bildaufnahmegerät;
Erkennen (102, 204) von zwei benachbarten ersten Parkplatzeckpunkten in dem Bild der Außenszene auf der Seite des Fahrzeugs;
Erkennen (103, 205) auf der Basis des Bildes der Außenszene auf der Seite des Fahrzeugs, ob sich in einem Bereich zwischen den zwei ersten Parkplatzeckpunkten ein Hindernis befindet;
Erkennen (104, 206), wenn ein Hindernis vorhanden ist, ob sich das Hindernis in dem Bereich zwischen den zwei ersten Parkplatzeckpunkten befindet, mittels eines auf der Seite des Fahrzeugs angeordneten Ultraschallsensors; und
Bestimmen (105, 207), wenn der Ultraschallsensor auf der Seite des Fahrzeugs erkennt, dass sich kein Hindernis in dem Bereich zwischen den zwei ersten Parkplatzeckpunkten befindet, mit Bezug auf ein die zwei ersten Parkplatzeckpunkte verbindendes Liniensegment, eines Orts eines ersten verfügbaren Parkplatzes, so dass eine Mittelachse des ersten verfügbaren Parkplatzes durch einen Mittelpunkt des Liniensegments verläuft.

2. Verfahren nach Anspruch 1, wobei das Verfahren ferner, nach dem Bestimmen des Orts des ersten verfügbaren Parkplatzes, Folgendes beinhaltet:
Erzeugen (208) einer Einparkbahn auf der Basis des Orts des ersten verfügbaren Parkplatzes;
Aufnehmen (209) eines zweiten Bildes einer Szene außerhalb des Hecks des Fahrzeugs durch das am Heck des Fahrzeugs angeordnete Bildaufnahmegerät während eines Einparkmanövers des Fahrzeugs in den ersten verfügbaren Parkplatz entlang der Einparkbahn;
Erkennen (210) von zwei benachbarten zweiten Parkplatzeckpunkten in dem zweiten Bild der Szene außerhalb des Hecks des Fahrzeugs;
Prüfen (211), ob ein Versatzwert zwischen den zwei zweiten Parkplatzeckpunkten und den zwei ersten Parkplatzeckpunkten kleiner als ein vorgegebener erster Schwellenwert ist, wobei sich der Versatzwert auf einen Abstand bezieht, um den die zwei zweiten Parkplatzeckpunkte gegenüber den zwei ersten Parkplatzeckpunkten versetzt sind;
Bestimmen (212), wenn der Versatzwert kleiner als der vorgegebene erste Schwellenwert ist, mit Bezug auf ein die zwei zweiten Parkplatzeckpunkte verbindendes Liniensegment, eines Orts eines zweiten verfügbaren Parkplatzes, so dass eine Mittelachse des zweiten verfügbaren Parkplatzes durch einen Mittelpunkt des die zwei zweiten Parkplatzeckpunkte verbindenden Liniensegments verläuft;
Erkennen (214), ob sich in dem zweiten verfügbaren Parkplatz ein Hindernis befindet, mittels eines am Heck des Fahrzeugs angeordneten Ultraschallsensors; und
Verschieben (215), wenn ein Hindernis vorhanden ist, der Mittelachse des zweiten verfügbaren Parkplatzes in einer Richtung weg von dem Hindernis auf der Basis eines Orts des Hindernisses in dem zweiten verfügbaren Parkplatz, und Bestimmen eines Orts eines dritten verfügbaren Parkplatzes auf der Basis der verschobenen Mittelachse des zweiten verfügbaren Parkplatzes.

3. Verfahren nach Anspruch 2, das ferner Folgendes beinhaltet:
Erkennen (216), wenn der Versatzwert zwischen den zwei zweiten Parkplatzeckpunkten und den zwei ersten Parkplatzeckpunkten so groß wie oder größer als der vorgegebene erste Schwellenwert ist, ob sich im ersten verfügbaren Parkplatz ein Hindernis befindet, mittels des am Heck des Fahrzeugs angeordneten Ultraschallsensors; und
Verschieben (217), wenn ein Hindernis vorhanden ist, der Mittelachse des ersten verfügbaren Parkplatzes in einer Richtung weg vom Hindernis auf der Basis eines Orts des Hindernisses im ersten verfügbaren Parkplatz und Bestimmen eines Orts eines vierten verfügbaren Parkplatzes auf der Basis der verschobenen Mittelachse des ersten verfügbaren Parkplatzes.

4. Verfahren nach Anspruch 3, wobei das Verfahren ferner, nach dem Bestimmen des Orts des zweiten verfügbaren Parkplatzes, Folgendes beinhaltet:
Prüfen (213), ob ein Abweichungswert zwischen dem Ort des zweiten verfügbaren Parkplatzes und dem Ort des ersten verfügbaren Parkplatzes größer ist als ein vorgegebener zweiter Schwellenwert;
Ausführen, wenn der Abweichungswert zwischen dem Ort des zweiten verfügbaren Parkplatzes und dem Ort des ersten verfügbaren Parkplatzes größer als der vorgegebene zweite Schwellenwert ist, des Schritts des Erkennens (216), ob sich ein Hindernis im ersten verfügbaren Parkplatz befindet, mittels des am Heck des Fahrzeugs angeordneten Ultraschallsensors; und
Ausführen, wenn der Abweichungswert zwischen dem Ort des zweiten verfügbaren Parkplatzes und dem Ort des ersten verfügbaren Parkplatzes so groß wie oder kleiner als der vorgegebene zweite Schwellenwert ist, des Schritts des Erkennens (214), ob sich im zweiten verfügbaren Parkplatz ein Hindernis befindet, mittels des am Heck des Fahrzeugs angeordneten Ultraschallsensors.

5. Verfahren nach einem der Ansprüche 1 bis 4, wobei das Verfahren ferner, vor dem Aufnehmen des Bildes der Außenszene auf der Seite des Fahrzeugs durch das am Rückspiegel des Fahrzeugs angeordnete Bildaufnahmegerät, Folgendes beinhaltet:
Erkennen (201), ob eine Umgebungslichtintensität um das Fahrzeug herum niedriger ist als eine voreingestellte Lichtintensität; und
wenn ja, Einschalten (202) der Fahrzeugbeleuchtung, um die Aufnahme des Bildes der Außenszene auf der Seite des Fahrzeugs durch das am Rückspiegel des Fahrzeugs angeordnete Bildaufnahmegerät zu erleichtern.

6. Verfahren nach einem der Ansprüche 1 bis 5, wobei der Schritt des Erkennens (103, 205) auf der Basis des Bildes der Außenszene auf der Seite des Fahrzeugs, ob sich in einem Bereich zwischen den zwei ersten Parkplatzeckpunkten ein Hindernis befindet, ferner Folgendes beinhaltet:
Bestimmen auf der Basis von Randinformationen des Bereichs zwischen den zwei ersten Parkplatzeckpunkten in dem Bild, ob sich ein Hindernis in dem Bereich zwischen den zwei ersten Parkplatzeckpunkten befindet,
wobei die Randinformationen die Verteilung von Pixeln sind, die Umrisse verschiedener Grafiken in dem Bild der Außenszene auf der Seite des Fahrzeugs bilden.

7. Parkplatzerkennungsgerät, das Folgendes umfasst:
eine Bildaufnahmeeinheit (301), konfiguriert zum Aufnehmen eines Bildes einer Außenszene auf einer Seite eines Fahrzeugs durch ein an einem Rückspiegel des Fahrzeugs angeordnetes Bildaufnahmegerät;
eine Bilderkennungseinheit (302), konfiguriert zum Erkennen von zwei benachbarten ersten Parkplatzeckpunkten in dem Bild der Außenszene auf der Seite des Fahrzeugs;
eine erste Erkennungseinheit (303), konfiguriert zum Erkennen auf der Basis des Bildes der Außenszene auf der Seite des Fahrzeugs, ob sich in einem Bereich zwischen den zwei ersten Parkplatzeckpunkten ein Hindernis befindet;
eine Ultraschallerkennungseinheit (304), konfiguriert zum Erkennen, wenn die erste Erkennungseinheit erkennt, dass sich ein Hindernis in dem Bereich zwischen den zwei ersten Parkplatzeckpunkt befindet, mittels eines auf der Seite des Fahrzeugs angeordneten Ultraschallsensors, ob sich ein Hindernis in dem Bereich zwischen den zwei ersten Parkplatzeckpunkten befindet; und
eine erste Bestimmungseinheit (305), konfiguriert zum Bestimmen, wenn die Ultraschallerkennungseinheit mittels des Ultraschallsensors auf der Seite des Fahrzeugs erkennt, dass sich kein Hindernis in dem Bereich zwischen den zwei ersten Parkplatzeckpunkten befindet, mit Bezug auf ein die zwei ersten Parkplatzeckpunkte verbindendes Liniensegment, eines Orts eines ersten verfügbaren Parkplatzes, so dass eine Mittelachse des ersten verfügbaren Parkplatzes durch einen Mittelpunkt des Liniensegments verläuft.

8. Parkplatzerkennungsgerät nach Anspruch 7, das ferner Folgendes umfasst:
eine Erzeugungseinheit (306), konfiguriert zum Erzeugen einer Einparkbahn auf der Basis des Orts des ersten verfügbaren Parkplatzes, nachdem die erste Bestimmungseinheit den Ort des ersten verfügbaren Parkplatzes mit Bezug auf das die zwei ersten Parkplatzeckpunkte verbindende Liniensegment bestimmt hat;
die Aufnahmeeinheit, ferner konfiguriert zum Aufnehmen eines zweiten Bildes einer Szene außerhalb des Hecks des Fahrzeugs mit dem am Heck des Fahrzeugs angeordneten Bildaufnahmegerät während eines Einparkmanövers des Fahrzeugs in den ersten verfügbaren Parkplatz entlang der Einparkbahn;
die Bilderkennungseinheit, ferner konfiguriert zum Erkennen von zwei benachbarten zweiten Parkplatzeckpunkten im zweiten Bild der Szene außerhalb des Hecks des Fahrzeugs;
eine erste Prüfeinheit (307), konfiguriert zum Prüfen, ob ein Versatzwert zwischen den zwei zweiten Parkplatzeckpunkten und den zwei ersten Parkplatzeckpunkten kleiner als ein vorgegebener erster Schwellenwert ist, wobei sich der Versatzwert auf einen Abstand bezieht, um den die zwei zweiten Parkplatzeckpunkte gegenüber den zwei ersten Parkplatzeckpunkten versetzt sind;
eine zweite Bestimmungseinheit (308), konfiguriert zum Bestimmen, wenn die erste Prüfeinheit bestimmt, dass der Versatzwert zwischen den zwei zweiten Parkplatzeckpunkten und den zwei ersten Parkplatzeckpunkten kleiner als der vorgegebene erste Schwellenwert ist, eines Orts eines zweiten verfügbaren Parkplatzes mit Bezug auf ein die zwei zweiten Parkplatzeckpunkte verbindendes Liniensegment, so dass eine Mittelachse des zweiten verfügbaren Parkplatzes durch einen Mittelpunkt des die zwei zweiten Parkplatzeckpunkte verbindenden Liniensegments verläuft;
die Ultraschalterkennungseinheit, ferner konfiguriert zum Erkennen, mittels eines am Heck des Fahrzeugs angeordneten Ultraschallsensors, ob sich in dem zweiten verfügbaren Parkplatz ein Hindernis befindet; und
eine dritte Bestimmungseinheit (309), konfiguriert zum Verschieben, wenn die Ultraschalterkennungseinheit erkennt, dass sich ein Hindernis im zweiten verfügbaren Parkplatz befindet, der Mittelachse des zweiten verfügbaren Parkplatzes in einer Richtung weg von dem Hindernis auf der Basis eines Orts des Hindernisses in dem zweiten verfügbaren Parkplatz, und zum Bestimmen eines Orts eines dritten verfügbaren Parkplatzes auf der Basis der verschobenen Mittelachse des zweiten verfügbaren Parkplatzes.

9. Parkplatzerkennungsgerät nach Anspruch 8, das ferner Folgendes umfasst:
die Ultraschalterkennungseinheit, ferner konfiguriert zum Erkennen, wenn die erste Prüfeinheit bestimmt, dass der Versatzwert zwischen den zwei zweiten Parkplatzeckpunkten und den zwei ersten Parkplatzeckpunkten so groß wie oder größer als der vorgegebene erste Schwellenwert ist, mittels des am Heck des Fahrzeugs angeordneten Ultraschallsensors, ob sich ein Hindernis im ersten verfügbaren Parkplatz befindet; und
eine vierte Bestimmungseinheit (310), konfiguriert zum Verschieben, wenn die Ultraschallerkennungseinheit erkennt, dass sich das Hindernis im ersten verfügbaren Parkplatz befindet, der Mittelachse des ersten verfügbaren Parkplatzes in einer Richtung weg von dem Hindernis auf der Basis eines Orts des Hindernisses im ersten verfügbaren Parkplatz, und zum Bestimmen eines Orts eines vierten verfügbaren Parkplatzes auf der Basis der verschobenen Mittelachse des ersten verfügbaren Parkplatzes.

10. Parkplatzerkennungsgerät nach Anspruch 9, das ferner Folgendes umfasst:
eine zweite Prüfeinheit (311), konfiguriert zum Prüfen, ob ein Abweichungswert zwischen dem Ort des zweiten verfügbaren Parkplatzes und dem Ort des ersten verfügbaren Parkplatzes größer als ein vorgegebener zweiter Schwellenwert ist, nachdem die zweite Bestimmungseinheit den Ort des zweiten verfügbaren Parkplatzes mit Bezug auf das die zwei zweiten Parkplatzeckpunkte verbindende Liniensegment bestimmt hat; und
die Ultraschallerkennungseinheit, ferner konfiguriert zum Erkennen, wenn die zweite Prüfeinheit bestimmt, dass der Abweichungswert zwischen dem Ort des zweiten verfügbaren Parkplatzes und dem Ort des ersten verfügbaren Parkplatzes größer als der vorgegebene zweite Schwellenwert ist, mittels des am Heck des Fahrzeugs angeordneten Ultraschallsensors, ob sich ein Hindernis im ersten verfügbaren Parkplatz befindet;
wobei die Ultraschalterkennungseinheit konfiguriert ist zum Erkennen mittels des am Heck des Fahrzeugs angeordneten Ultraschallsensors, ob sich im zweiten verfügbaren Parkplatz ein Hindernis befindet, auf eine solche Weise, dass:
die Ultraschallerkennungseinheit mittels des am Heck des Fahrzeugs angeordneten Ultraschallsensors erkennt, ob sich ein Hindernis im zweiten verfügbaren Parkplatz befindet, wenn die zweite Prüfeinheit bestimmt, dass der Abweichungswert zwischen dem Ort des zweiten verfügbaren Parkplatzes und dem Ort des ersten verfügbaren Parkplatzes so groß wie oder kleiner als der vorgegebene zweite Schwellenwert ist.

11. Parkplatzerkennungsgerät nach einem der Ansprüche 7 bis 10, das ferner Folgendes umfasst:
eine zweite Erkennungseinheit (312), konfiguriert zum Erkennen, bevor die Aufnahmeeinheit das Bild der Außenszene auf der Seite des Fahrzeugs mit dem am Rückspiegel des Fahrzeugs angeordneten Bildaufnahmegerät erkennt, ob eine Umgebungslichtintensität um das Fahrzeug herum niedriger ist als eine voreingestellte Lichtintensität; und
eine Schalteinheit (313), konfiguriert zum Einschalten der Fahrzeugbeleuchtung, um das Aufnehmen des Bildes der Außenszene auf der Seite des Fahrzeugs durch das am Rückspiegel des Fahrzeugs angeordnete Bildaufnahmegerät zu erleichtern, wenn die zweite Erkennungseinheit erkennt, dass die Umgebungslichtintensität um das Fahrzeug herum niedriger ist als die voreingestellte Lichtintensität.

12. Parkplatzerkennungsgerät nach einem der Ansprüche 7 bis 11, wobei die erste Erkennungseinheit (303) ferner konfiguriert ist zum Bestimmen auf der Basis von Randinformationen des Bereichs zwischen den zwei ersten Parkplatzeckpunkten in dem Bild, ob sich in dem Bereich zwischen den zwei ersten Parkplatzeckpunkten ein Hindernis befindet,
wobei die Randinformationen die Verteilung von Pixeln sind, die Umrisse verschiedener Grafiken in dem Bild der Außenszene an der Seite des Fahrzeugs bilden.

## Revendications

1. Procédé de détection d'un espace de stationnement, comprenant les étapes suivantes :
une capture (101, 203) d'une image d'une scène extérieure sur un côté d'un véhicule par un dispositif de capture d'image disposé au niveau d'un rétroviseur du véhicule ;
une détection (102, 204) de deux premiers points de coin d'espace de stationnement adjacents dans l'image de la scène extérieure sur le côté du véhicule ;
une détection (103, 205) si un obstacle est présent ou non dans une zone entre les deux premiers points de coin d'espace de stationnement sur la base de l'image de la scène extérieure sur le côté du véhicule ;
si un obstacle est présent, une détection (104, 206) si l'obstacle est présent ou non dans la zone entre les deux premiers points de coin d'espace de stationnement à l'aide d'un capteur ultrasonique disposé sur le côté du véhicule ; et
si le capteur ultrasonique sur le côté du véhicule détecte qu'aucun obstacle n'est présent dans la zone entre les deux premiers points de coin d'espace de stationnement, une détermination (105, 207), par rapport à un segment de ligne reliant les deux premiers points de coin d'espace de stationnement, d'un emplacement d'un premier espace de stationnement disponible, de sorte qu'un axe central du premier espace de stationnement disponible traverse un point médian du segment de ligne.

2. Procédé selon la revendication 1, le procédé comprenant en outre, après la détermination de l'emplacement du premier espace de stationnement disponible :
une génération (208) d'une trajectoire de stationnement sur la base de l'emplacement du premier espace de stationnement disponible ;
une capture (209) d'une seconde image d'une scène extérieure d'un arrière du véhicule par le dispositif de capture d'image disposé à l'arrière du véhicule pendant une manœuvre de stationnement du véhicule dans le premier espace de stationnement disponible le long de la trajectoire de stationnement ;
une détection (210) de deux seconds points de coin d'espace de stationnement adjacents dans la seconde image de la scène extérieure de l'arrière du véhicule ;
une vérification (211) si une valeur de décalage entre les deux seconds points de coin d'espace de stationnement et les deux premiers points de coin d'espace de stationnement est inférieure ou non à un premier seuil spécifié, dans lequel la valeur de décalage désigne une distance de laquelle les deux seconds points de coin d'espace de stationnement sont décalés par rapport aux deux premiers points de coin d'espace de stationnement ;
si la valeur de décalage est inférieure au premier seuil spécifié, une détermination (212), par rapport à un segment de ligne reliant les deux seconds points de coin d'espace de stationnement, d'un emplacement d'un deuxième espace de stationnement disponible, de sorte qu'un axe central du deuxième espace de stationnement disponible traverse un point médian du segment de ligne reliant les deux seconds points de coin d'espace de stationnement ;
une détection (214) si un obstacle est présent ou non dans le deuxième espace de stationnement disponible à l'aide d'un capteur ultrasonique disposé à l'arrière du véhicule ; et
si un obstacle est présent, un décalage (215) de l'axe central du deuxième espace de stationnement disponible dans une direction opposée à l'obstacle sur la base d'un emplacement de l'obstacle dans le deuxième espace de stationnement disponible, et une détermination d'un emplacement d'un troisième espace de stationnement disponible sur la base de l'axe central décalé du deuxième espace de stationnement disponible.

3. Procédé selon la revendication 2, comprenant en outre :
si la valeur de décalage entre les deux seconds points de coin d'espace de stationnement et les deux premiers points de coin d'espace de stationnement est supérieure ou égale au premier seuil spécifié, une détection (216) du fait qu'un obstacle est présent dans le premier espace de stationnement disponible à l'aide du capteur ultrasonique disposé à l'arrière du véhicule ; et
si un obstacle est présent, un décalage (217) de l'axe central du premier espace de stationnement disponible dans une direction opposée à l'obstacle sur la base d'un emplacement de l'obstacle dans le premier espace de stationnement disponible, et une détermination d'un emplacement d'un quatrième espace de stationnement disponible sur la base de l'axe central décalé du premier espace de stationnement disponible.

4. Procédé selon la revendication 3, le procédé comprenant en outre, après la détermination de l'emplacement du deuxième espace de stationnement disponible :
une vérification (213) si une valeur d'écart entre l'emplacement du deuxième espace de stationnement disponible et l'emplacement du premier espace de stationnement disponible est supérieure ou non à un second seuil spécifié ;
si la valeur d'écart entre l'emplacement du deuxième espace de stationnement disponible et l'emplacement du premier espace de stationnement disponible est supérieure au second seuil spécifié, une réalisation de l'étape de détection (216) si un obstacle est présent ou non dans le premier espace de stationnement disponible à l'aide du capteur ultrasonique disposé à l'arrière du véhicule ; et
si la valeur d'écart entre l'emplacement du deuxième espace de stationnement disponible et l'emplacement du premier espace de stationnement disponible est inférieure ou égale au second seuil spécifié, une réalisation de l'étape de détection (214) si un obstacle est présent ou non dans le deuxième espace de stationnement disponible à l'aide du capteur ultrasonique disposé à l'arrière du véhicule.

5. Procédé selon l'une des revendications 1 à 4, le procédé comprenant en outre, avant la capture de l'image de la scène extérieure sur le côté du véhicule par le dispositif de capture d'image disposé au niveau du rétroviseur du véhicule :
une détection (201) si une intensité de lumière ambiante autour du véhicule est inférieure ou non à une intensité lumineuse prédéfinie ; et
dans le cas de l'affirmative, une activation (202) des lumières du véhicule afin de faciliter la capture de l'image de la scène extérieure sur le côté du véhicule par le dispositif de capture d'image disposé au niveau du rétroviseur du véhicule.

6. Procédé selon l'une des revendications 1 à 5, dans lequel l'étape de détection (103, 205) si un obstacle est présent ou non dans une zone entre les deux premiers points de coin d'espace de stationnement sur la base de l'image de la scène extérieure sur le côté du véhicule comprend en outre :
une détermination si un obstacle est présent ou non dans la zone entre les deux premiers points de coin d'espace de stationnement sur la base d'informations de bords de la zone entre les deux premiers points de coin d'espace de stationnement dans l'image,
dans lequel les informations de bord sont la distribution de pixels qui constituent des tracés de divers graphiques dans l'image de la scène extérieure sur le côté du véhicule.

7. Dispositif de détection d'espace de stationnement, comprenant :
une unité de capture d'image (301), configurée pour capturer une image d'une scène extérieure sur un côté d'un véhicule par un dispositif de capture d'image disposé au niveau d'un rétroviseur du véhicule ;
une unité de détection d'image (302), configurée pour détecter deux premiers points de coin d'espace de stationnement adjacents dans l'image de la scène extérieure sur le côté du véhicule ;
une première unité de détection (303), configurée pour détecter si un obstacle est présent ou non dans une zone entre les deux premiers points de coin d'espace de stationnement sur la base de l'image de la scène extérieure sur le côté du véhicule ;
une unité de détection ultrasonique (304), configurée pour, si la première unité de détection détecte qu'un obstacle est présent dans la zone entre les deux premiers points de coin d'espace de stationnement, détecter si un obstacle est présent ou non dans la zone entre les deux premiers points de coin d'espace de stationnement à l'aide d'un capteur ultrasonique disposé sur le côté du véhicule ; et
une première unité de détermination (305), configurée pour, si l'unité de détection ultrasonique détecte à l'aide du capteur ultrasonique sur le côté du véhicule qu'aucun obstacle n'est présent dans la zone entre les deux premiers points de coin d'espace de stationnement, déterminer, par rapport à un segment de ligne reliant les deux premiers points de coin d'espace de stationnement, un emplacement d'un premier espace de stationnement disponible, de sorte qu'un axe central du premier espace de stationnement disponible traverse un point médian du segment de ligne.

8. Dispositif de détection d'espace de stationnement selon la revendication 7, comprenant en outre :
une unité de génération (306), configurée pour générer une trajectoire de stationnement sur la base de l'emplacement du premier espace de stationnement disponible, après que la première unité de détermination détermine l'emplacement du premier espace de stationnement disponible par rapport au segment de ligne reliant les deux premiers points de coin d'espace de stationnement ;
l'unité de capture, configurée en outre pour capturer une seconde image d'une scène extérieure d'un arrière du véhicule par le dispositif de capture d'image disposé à l'arrière du véhicule pendant une manœuvre de stationnement du véhicule dans le premier espace de stationnement disponible le long de la trajectoire de stationnement ;
l'unité de détection d'image, configurée en outre pour détecter deux seconds points de coin d'espace de stationnement adjacents dans la seconde image de la scène extérieure de l'arrière du véhicule ;
une première unité de vérification (307), configurée pour vérifier si une valeur de décalage entre les deux seconds points de coin d'espace de stationnement et les deux premiers points de coin d'espace de stationnement est inférieure ou non à un premier seuil spécifié, dans lequel la valeur de décalage désigne une distance de laquelle les deux seconds points de coin d'espace de stationnement sont décalés par rapport aux deux premiers points de coin d'espace de stationnement ;
une deuxième unité de détermination (308), configurée pour, si la première unité de vérification détermine que la valeur de décalage entre les deux seconds points de coin d'espace de stationnement et les deux premiers points de coin d'espace de stationnement est inférieure au premier seuil spécifié, déterminer un emplacement d'un deuxième espace de stationnement disponible par rapport à un segment de ligne reliant les deux seconds points de coin d'espace de stationnement, de sorte qu'un axe central du deuxième espace de stationnement disponible traverse un point médian du segment de ligne reliant les deux seconds points de coin d'espace de stationnement ;
l'unité de détection ultrasonique, configurée en outre pour détecter si un obstacle est présent ou non dans le deuxième espace de stationnement disponible à l'aide d'un capteur ultrasonique disposé à l'arrière du véhicule ; et
une troisième unité de détermination (309), configurée pour, si l'unité de détection ultrasonique détecte qu'un obstacle est présent dans le deuxième espace de stationnement disponible, décaler l'axe central du deuxième espace de stationnement disponible dans une direction opposée à l'obstacle sur la base d'un emplacement de l'obstacle dans le deuxième espace de stationnement disponible, et déterminer un emplacement d'un troisième espace de stationnement disponible sur la base de l'axe central décalé du deuxième espace de stationnement disponible.

9. Dispositif de détection d'espace de stationnement selon la revendication 8, comprenant en outre :
l'unité de détection ultrasonique, configurée en outre pour, si la première unité de vérification détermine que la valeur de décalage entre les deux seconds points de coin d'espace de stationnement et les deux premiers points de coin d'espace de stationnement est supérieure ou égale au premier seuil spécifié, détecter si un obstacle est présent ou non dans le premier espace de stationnement disponible à l'aide du capteur ultrasonique disposé à l'arrière du véhicule ; et
une quatrième unité de détermination (310), configurée pour, si l'unité de détection ultrasonique détecte que l'obstacle est présent dans le premier espace de stationnement disponible, décaler l'axe central du premier espace de stationnement disponible dans une direction opposée à l'obstacle sur la base d'un emplacement de l'obstacle dans le premier espace de stationnement disponible, et déterminer un emplacement d'un quatrième espace de stationnement disponible sur la base de l'axe central décalé du premier espace de stationnement disponible.

10. Dispositif de détection d'espace de stationnement selon la revendication 9, comprenant en outre :
une seconde unité de vérification (311), configurée pour vérifier si une valeur d'écart entre l'emplacement du deuxième espace de stationnement disponible et l'emplacement du premier espace de stationnement disponible est supérieure à un second seuil spécifié, après que la deuxième unité de détermination détermine l'emplacement du deuxième espace de stationnement disponible par rapport au segment de ligne reliant les deux seconds points de coin d'espace de stationnement ; et
l'unité de détection ultrasonique, configurée en outre pour, si la seconde unité de vérification détermine que la valeur d'écart entre l'emplacement du deuxième espace de stationnement disponible et l'emplacement du premier espace de stationnement disponible est supérieure au second seuil spécifié, détecter si un obstacle est présent ou non dans le premier espace de stationnement disponible à l'aide du capteur ultrasonique disposé à l'arrière du véhicule ;
dans lequel l'unité de détection ultrasonique est configurée pour détecter si un obstacle est présent ou non dans le deuxième espace de stationnement disponible à l'aide du capteur ultrasonique disposé à l'arrière du véhicule de sorte que :
l'unité de détection ultrasonique détecte si un obstacle est présent ou non dans le deuxième espace de stationnement disponible à l'aide du capteur ultrasonique disposé à l'arrière du véhicule, si la seconde unité de vérification détermine que la valeur d'écart entre l'emplacement du deuxième espace de stationnement disponible et l'emplacement du premier espace de stationnement disponible est inférieure ou égale au second seuil spécifié.

11. Dispositif de détection d'espace de stationnement selon l'une des revendications 7 à 10, comprenant en outre :
une seconde unité de détection (312), configurée pour, avant que l'unité de capture ne capture l'image de la scène extérieure sur le côté du véhicule par le dispositif de capture d'image disposé au niveau du rétroviseur du véhicule, détecter si une intensité de lumière ambiante autour du véhicule est inférieure ou non à une intensité lumineuse prédéfinie ; et
une unité commutateur (313), configurée pour activer les lumières du véhicule afin de faciliter la capture de l'image de la scène extérieure sur le côté du véhicule par le dispositif de capture d'image disposé au niveau du rétroviseur du véhicule, lorsque la seconde unité de détection détecte le fait que l'intensité de lumière ambiante autour du véhicule est inférieure à l'intensité lumineuse prédéfinie.

12. Dispositif de détection d'espace de stationnement selon l'une des revendications 7 à 11, dans lequel la première unité de détection (303) est en outre configurée pour déterminer si un obstacle est présent ou non dans la zone entre les deux premiers points de coin d'espace de stationnement sur la base d'informations de bord de la zone entre les deux premiers points de coin d'espace de stationnement dans l'image,
dans lequel les informations de bord sont la distribution de pixels qui constituent des tracés de divers graphiques dans l'image de la scène extérieure sur le côté du véhicule.
